# EUROPEAN PATENT APPLICATION

(11) **EP 0 554 935 A1**
(43) Date of publication of application: **11.08.1993**
(21) Application number: 93200181.1
(22) Date of filing: 26.01.1993
(51) Int. Cl.: G01N 23/207, G01N 23/225, G01N 23/223

(54) **Combined X-ray spectrometer**

(30) Priority: 03.02.1992 EP 92200300
(71) Applicant: Philips Electronics N.V., 5621 BA Eindhoven (NL)
(72) Inventor: Kuipers, Johan G.H., c/o INT. OCTROOIBUREAU B.V., NL-5656 AA Eindhoven (NL); Brinker, Robertus J.M., c/o INT. OCTROOIBUREAU B.V, NL-5656 AA Eindhoven (NL); Van Egeraat, W.A.L.A., c/o INT. OCTROOIBUREAU B.V, NL-5656 AA Eindhoven (NL)
(74) Representative: W.P. THOMPSON & CO.

(57) **Abstract**

An X-ray spectrometer comprises a wavelength-sensitive measuring channel as well as an energy-sensitive measuring channel. Consequently, measured data from one channel can be used to optimize measurements by the other channel and measured signals from both measuring channels can be correlated. The energy-sensitive detector is preferably a semiconductor detector which is cooled by a cooling conductor originating from a dewar vessel arranged elsewhere.

## Description

The invention relates to an X-ray spectrometer, comprising an excitation source, a specimen holder for a specimen to be analyzed, and a detection system for detecting X-rays emanating from a specimen.

An X-ray spectrometer of this kind is known from DE 35 24 379. An apparatus described therein may be operative for wavelength-dispersive or energy-dispersive specimen analysis. The apparatus comprises two X-ray tubes in order to achieve a higher radiation load for the measurements.

It is an object of the invention to provide an X-ray analysis apparatus enabling wavelength-dispersive as well as energy-dispersive measurement at the same time. To achieve this, an X-ray analysis apparatus of the kind set forth in accordance with the invention is characterized in that the detection system comprises a wavelength-dispersive measuring channel as well as an energy-dispersive measuring channel.

Because an apparatus in accordance with the invention comprises a respective measuring channel for both measuring methods, to be understood to mean hereinafter a signal recording device between a specimen to be measured and a signal processing device, measured signals obtained according to both measuring methods can be individually recorded or be recorded together, as desired, so that, for example, via the energy-dispersive measuring channel a fast qualitative specimen image can be formed and via the wavelength-dispersive measuring channel a qualitative analysis of, for example, specified elements can be performed. Data acquired via energy-dispersive measurements and via wavelength-dispersive measurements can then be correlated as desired.

For excitation of the specimen the apparatus may comprise one or more radiation sources, for example in the form of end-window X-ray tubes or side-window X-ray tubes.

The energy-dispersive measuring channel in a preferred embodiment is notably operative to generate qualitative information and comprises a semiconductor detector, the wavelength-dispersive measuring channel being notably operative to generate quantitative information. In the measuring channel for energy-dispersive measurements there is included a radiation diaphragm, for example in the form of a pin hole in order to prevent over exposure of the detector included therein.

For energy-dispersive detection use is made of a cooled detector in a preferred embodiment for noise suppression. For the cooling thereof use is notably made of a cold finger between a cooling device, arranged outside the actual spectrometer, and the detector. Alternatively, use can be made of the non-cooled detector or a Peltier-cooled detector.

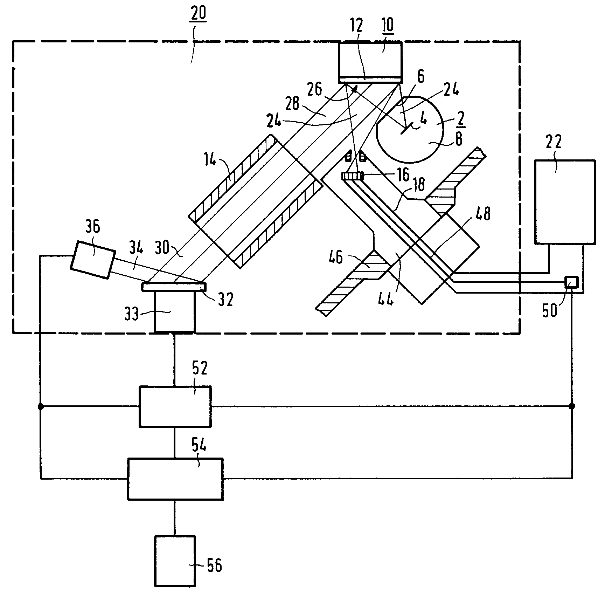

Some preferred embodiments in accordance with the invention will be described in detail hereinafter with reference to the drawing. The single figure of the drawing shows an X-ray analysis apparatus in accordance with the invention, comprising an X-ray tube 2 with an anode 4, an exit window 6 and a vacuum housing 8, a specimen holder changer 10 for positioning a specimen 12 to be analyzed, and a collimator 14. The apparatus furthermore comprises an energy-sensitive detector 16 which comprises a cold finger 18 which is connected to a dewar vessel 22 which is arranged at a minimum distance therefrom and in this case outside a housing of an actual spectrometer 20.

An X-ray beam 24 emitted by the anode 4 of the X-ray tube is incident across a surface 26 of the specimen. An X-ray beam 28 emanating from the specimen traverses the collimator 16 and strikes an analysis crystal 32 as a collimated beam 30. An X-ray beam 34 emanating from the crystal 32 is measured in known, angle-dependent and hence wavelength-dependent manner by a detector 36. Angular dependency is realised in known manner by means of a ϑ-2ϑ angular adjusting mechanism 33.

A radiation beam 40 emanating from the specimen is incident, via a diaphragm 42, on the energy-sensitive detector 16 which is preferably constructed as a semiconductor detector. The detector 16 is arranged at the end of the cold finger 18 which is mounted in a holder 44 which comprises a flange 46 which can act for vacuum sealing as well as for magnetic shielding; to this end, it is preferably made of nickel iron. An electric conductor 48 in the cooling conductor connects the detector to a preamplifier 50 which is accommodated outside the actual spectrometer in the present embodiment but which may alternatively be arranged in the vicinity of the detector 16. Signals generated by the detector 16 are applied to a computer 54 in known manner, either directly or via a connector 52 for further processing. Signals formed in the wavelength-sensitive detector 36 are applied, together with signals of the ϑ-2ϑ adjusting mechanism, to the central computer 54 again in known manner, either directly or via the connector 52. A recording unit 56, for example a printer, may be associated with the computer.

In the connector 52 the signals can be correlated and, if desired, combined. Thus, for example from a fast qualitative analysis via the energy-sensitive channel, a detailed qualitative analysis of specified elements can be realised via the wavelength-sensitive channel, so that a fast survey of the materials (elements) present in the specimen can be combined with an accurate analysis of materials thus found and of importance for the relevant examination. The wavelength-sensitive measuring channel may be adjusted to one or a few of the elements found, so that the analysis can be performed comparatively quickly and with a low noise level.

## Claims

1. An X-ray spectrometer, comprising an excitation source, a specimen holder for a specimen to be analyzed, and a detection system for detecting X-rays emanating from the specimen, characterized in that the detection system comprises a wavelength-dispersive measuring channel as well as an energy-dispersive measuring channel.

2. An X-ray spectrometer as claimed in Claim 1, characterized in that one or more excitation sources are included for generating radiation for both measuring channels.

3. An X-ray spectrometer as claimed in Claim 1 or 2, characterized in that an excitation source is constructed as a side-window X-ray tube.

4. An X-ray spectrometer as claimed in Claim 1 or 2, characterized in that an excitation source is constructed as an end-window X-ray tube.

5. An X-ray spectrometer as claimed in any one of the preceding Claims, characterized in that a radiation diaphragm is arranged in the X-ray beam path of the energy-dispersive measuring channel.

6. An X-ray spectrometer as claimed in any one of the preceding Claims, characterized in that the energy-dispersive measuring channel comprises a semiconductor detector which can be cooled by means of a cold finger originating from a dewar vessel arranged elsewhere.

7. An X-ray spectrometer as claimed in any one of the preceding Claims, characterized in that the energy-dispersive measuring channel is opeartive to generate qualitative information, the wavelength-dispersive measuring channel being operative to generate quantitative information concerning a specimen to be analyzed.

8. An X-ray spectrometer as claimed in any one of the preceding Claims, characterized in that control and signal processing devices of both measuring channels are coupled for intercorrelation of quantitative and qualitative specimen information.
